# EUROPEAN PATENT SPECIFICATION

(11) **EP 3 680 594 B1**
(45) Date of publication and mention of the grant of the patent: **26.10.2022**
(21) Application number: 20151502.0
(22) Date of filing: 13.01.2020
(51) Int. Cl.: F28D 9/00, F28F 9/18, B23K 1/00, F28F 9/02, F28D 21/00, B23K 1/008, B23K 1/19, B23K 101/14, B23K 103/04, B23K 103/10, B23K 103/12, B23K 103/14

(54) **BRAZED FLUID CONNECTION FOR A HEAT EXCHANGER**
GELÖTETE FLUIDVERBINDUNG FÜR EINEN WÄRMETAUSCHER
CONNEXION DE FLUIDE BRASÉE POUR UN ÉCHANGEUR DE CHALEUR

(30) Priority: 11.01.2019 US 201962791288 P
(43) Date of publication of application: 15.07.2020
(73) Proprietor: Modine Europe GmbH, 70794 Filderstadt (DE)
(72) Inventor: van Hoof, H.T.C., 5241 BR Rosmalen (NL)
(74) Representative: Ter Meer Steinmeister & Partner

(56) References cited:
- DE-A1- 19 805 439
- JP-A- H10 253 288
- US-A1- 2006 225 283
- US-A1- 2017 114 932

## Description

### BACKGROUND

Heat exchangers for efficiently transferring heat between fluid streams while maintaining physical separation between those fluid streams are known. Such heat exchangers are typically constructed from metal materials having a high thermal conductivity, such as alloys of aluminum or copper. In some cases one or more of the fluids are corrosive and/or at elevated pressure, requiring the use of materials such as titanium and stainless steel. All of these types of heat exchangers can be produced by brazing.

In many applications, the heat exchanger needs to be provided with fluid connections to allow for the coupling of the heat exchanger into one or more of the fluid circuits. These fluid connections are preferably provided with a shape that allows for a quick and reliable connection to tubes, hoses, or other fluid conveying means of the fluid circuit. The fluid connection can be mechanically joined to the heat exchanger, but such a connection typically requires an additional component such as an o-ring to provide a fluid seal at the interface, driving up the cost and causing a potential leak location.

The fluid connection can alternatively be brazed to the heat exchanger, but this causes other problems. Prior to the brazing of the heat exchanger, the fluid connection can be displaced from its proper position due to handling, resulting in poor braze joints and potential fluid leakages. In order to address this issue it is known to expand the connection into the heat exchanger prior to brazing, thereby securely retaining the fluid connection prior to brazing. This operation can, however, increase the cost and complexity of the manufacturing operation, as well as causing undesirable deformations in components of the heat exchanger. Thus there is still room for improvement. A brazed fluid connection for a heat exchanger according to the preamble of claim 1 is disclosed in DE 198 05 439 A1.

### SUMMARY

A brazed fluid connection for a heat exchanger according to the invention is defined in appended claim 1. A brazed fluid connection for a heat exchanger can include a fluid flow channel that extends from a first end of the brazed fluid connection to a second end of the brazed fluid connection. An extension can be arranged at the second end, and can extend into an aperture that is provided within a top plate of the heat exchanger. The aperture is preferably of a similar size and shape to the extension. For example, the extension and the aperture can both be cylindrical in shape. Alternatively, the extension and the aperture can both be square, hexagonal, octagonal, oval, or some other shape.

The braze fluid connection can include a shoulder arranged adjacent to the extension. The top plate can be provided with a flange that extends around a periphery of the aperture, and the shoulder can be disposed against that flange. During the assembly of the heat exchanger, the shoulder can abut the flange to provide a hard stop in order to precisely control the position insertion depth of the extension into the aperture.

The extension can be provided with a series of protrusions that extend outwardly from an outer surface of the extension. At least one of the protrusions, and sometimes more than one of the protrusions, can engage against the inner wall of the flange. This can allow for precise positioning of the extension within the aperture, and can provide a uniform gap between the inner wall of the flange and the outer surface of the extension. The inner wall of the flange can be a cylindrical inner wall when, for example, both the aperture and the extension are cylindrical in shape.

Braze alloy can be provided within the gap between the inner wall of the flange and the outer surface of the extension in order to create a metallurgical joint between the extension and the inner wall of the flange, so that the fluid connection is a secure brazed fluid connection of the heat exchanger. The top plate can be formed from a sheet of metal material, and the braze alloy can initially be provided as a clad layer on a surface of that sheet of metal material, particularly on the surface of the sheet that provides the inner wall of the flange. The heat exchanger can be heated within a braze furnace in order to melt that clad layer, so that the melted braze alloy from the inner wall of the flange can wet against the outer surface of the extension and can re-solidify to form the braze joint. Alternatively, the braze alloy can be provided as a separate component in a paste or ring form and can be melted in a similar way to provide the braze joint.

The extension can be provided with two protrusions, or with three protrusions, or with more protrusions. The protrusions can be sequentially arranged in an axial direction of the extension, so that successive ones of the protrusions are located further from the shoulder.

The protrusions can have a conical profile that transitions from a first diameter to a second diameter, with the second diameter being greater than the first diameter. The extension can be a cylindrical extension with an outer diameter that is equal to the first diameter of each one of the protrusions. The second diameters of the protrusions can all be equal in value, or can all have different values, or some can be equal to others and different than still others. The conical profiles can be oriented so that the first diameter (the smaller diameter) is located further from the shoulder than the second diameter (the larger diameter). In this manner the protrusions can function as a lead-in for the insertion of the extension into the aperture.

The protrusions can be sized and arranged so that a first protrusion is located further from the shoulder than a second protrusion, both protrusions having a conical profile with a first diameter equal to the outer diameter of the cylindrical extension and a second diameter that is greater than the first diameter. Both protrusions can have the first diameter arranged further from the shoulder than the second diameter. The second diameter of the first protrusion can be smaller than the second diameter of the second protrusion. This can allow the first protrusion to function as a centering protrusion that accurately locates the cylindrical extension concentrically within the aperture, while the second protrusion frictionally engages against the cylindrical inner wall of the flange to retain the fluid connection within the top plate prior to the brazing operation. The second diameter of the second protrusion can be sized to create a slight interference fit between the protrusion and the inner wall of the flange, so that some material is displaced during the insertion of the fluid connection in order to provide a more secure retention prior to brazing. One or more additional protrusions can be provided between the first and the second protrusions, and each of those one or more protrusion can function as either a centering protrusion similar to the first protrusion or an engaging protrusion similar to the second protrusion. The second diameters of the multiple protrusions can vary so that they are progressively larger from the end of the extension furthest from the shoulder to the shoulder itself.

The first end of the brazed fluid connection can be particularly adapted to securely receive a fluid hose. This allows for the fluid connection of the heat exchanger into a fluid circuit such as, for example, a coolant circuit. The heat exchanger can be provided with two such brazed fluid connections so that one connection functions as a coolant inlet for the heat exchanger and the other connection functions as a coolant outlet for the heat exchanger. Another fluid such as engine oil, transmission oil, refrigerant, charge air, exhaust gas, another coolant flow, water, or others can be directed through the heat exchanger concurrently with the fluid of the fluid circuit and can exchange heat therewith within the heat exchanger.

### BRIEF DESCRIPTION OF THE DRAWINGS

FIG. 1 is a perspective view of a heat exchanger with brazed fluid connections, according to an embodiment of the invention.
FIG. 2 is a perspective view of one of the fluid connections of FIG. 1.
FIG. 3 is a sectional plan view of the fluid connection of FIG. 2.
FIG. 4 is an enlarged detail view of the portion of FIG. 3 within the dashed circle IV-IV.
FIG. 5 is a partial sectional plan view of the fluid connection of FIG. 2 brazed into a top plate of the heat exchanger of FIG. 1.
FIG. 6 is an enlarged detail view of the portion of FIG. 5 within the dashed circle VI-VI.

### DETAILED DESCRIPTION

Before any embodiments of the invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

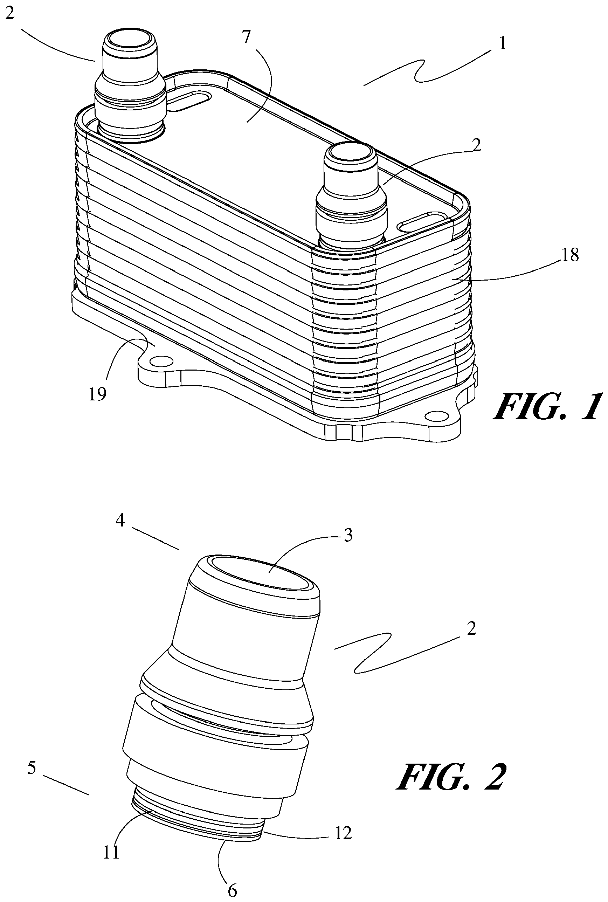

A brazed aluminum heat exchanger 1 with brazed-in fluid connections 2 is depicted in FIG. 1. The heat exchanger 1 can be used as, for example, a liquid cooler within a vehicular engine system. As one non-limiting example, the heat exchanger 1 can be used to cool engine oil or transmission oil by circulating the oil through heat exchanger along with a liquid coolant, the oil and the liquid coolant being kept physically separated from one another but in heat transfer contact through dividing plates of the heat exchanger. The liquids to be heated and cooled can alternatively include refrigerants, coolants, or other fluids. In some cases one or both of the fluids circulating through the heat exchanger can be in a gaseous form.

The exemplary heat exchanger of FIG. 1 is constructed as a stack of nested shells 18 that are mounted to a baseplate 19, although other constructions may be equally suitable for use with the present invention. At the end opposite the baseplate 19, a top plate 7 caps off the stack of nested shells 18. The fluid connections 2 are joined to the top plate 7 as will be described.

The heat exchanger 1 is preferably a brazed heat exchanger constructed of aluminum alloys. Alternatively, the heat exchanger 1 can be a brazed heat exchanger constructed of other alloys such as stainless steel, copper, titanium, or others.

In the exemplary heat exchanger 1, two fluid connections 2 are joined to the top plate 7. Preferably, these two fluid connections 2 are used to fluidly connect the heat exchanger 1 to a circuit for a fluid, such as a coolant circuit, so that the fluid traveling along the fluid circuit is directed into the heat exchanger 1 through one of the fluid connections 2 and is subsequently removed from the heat exchanger 1 through the other fluid connection 2. Within the heat exchanger 1, the fluid is distributed to multiple fluid passages that hydraulically connect the two fluid connections 2. Such fluid passages can be defined, for example, between some adjacent pairs of nested shells 18. Another fluid to or from which the first fluid transfers heat can be separately routed into and out of the heat exchanger 1, for example through the base plate 19, and can flow through additional fluid passages. These additional fluid passages can also be, by way of example, defined by adjacent pairs of nested shells 18, so that the passages for the two fluids are interlaced within the heat exchanger 1 and are separated from one another by the shells 18, heat being transferred from one of the fluids to the other through the individual shells.

It should be understood that the invention is not limited to having exactly two such fluid connections 2 joined to the top plate 7. In some embodiments, only a single fluid connection 2 may be present, with the other port for that fluid being disposed elsewhere (such as, for example, on the base plate 19). In other embodiments, one or both of the fluid connections for the other fluid may additionally be joined to the top plate 7 as additional fluid connections 2.

A representative one of the fluid connections 2 is depicted in an unassembled and unbrazed state in FIGs. 2-4, for ease of description. The fluid connection 2 can be formed from a similar alloy as the nested shells 18 and top plate 7 and baseplate 19, such as an aluminum alloy, and can be produced by machining, casting, or other known metal-forming processes. A fluid flow channel 3 extends through the fluid connection 2 from a first end 4 to an opposite end 5, so that fluid can be conveyed through the fluid connection 2.

The first end 4 is adapted to securely receive a fluid hose (not shown), so that the heat exchanger 1 can be coupled to a fluid circuit by way of the fluid connection 2.

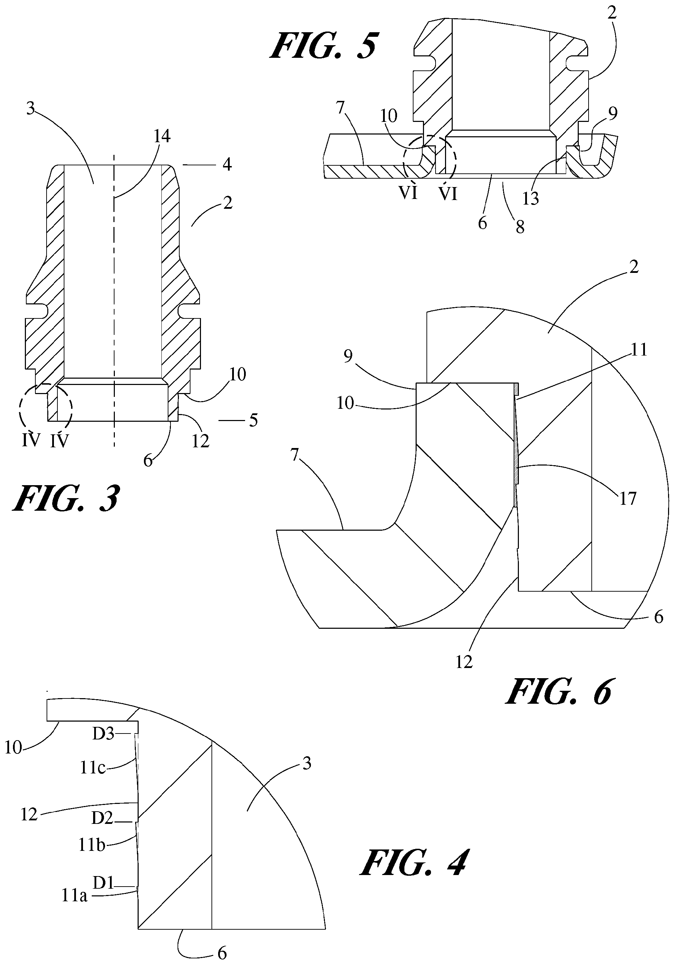

A cylindrical extension 6 is provided at the second end 5 of the fluid connection 2, and is inserted into a cylindrical aperture 8 of the top plate 7 during assembly of the heat exchanger 1. FIGs. 5 and 6 depict one of the fluid connections 2 joined and brazed to the top plate 7 of the heat exchanger 1. As shown, the top plate 7 is provided with a flange 9 that extends along the periphery of the cylindrical aperture 8. The aperture 8 and flange 9 can be formed by a piercing and forming operation, whereby a circular hole is punched into the sheet from which the top plate 7 is constructed and the flange 9 is drawn normal to the planar surface of the sheet from the periphery of the hole. In order to aid in the secure and repeatable positioning of the fluid connection 2 into the heat exchanger 1, the fluid connection 2 can be provided with a shoulder 10 adjacent to the cylindrical extension 6. During assembly of the fluid connection 2 and the top plate 7, prior to brazing of the heat exchanger 1, the cylindrical extension 6 can be inserted into the cylindrical aperture 8 until the shoulder 10 engages against the flange 9.

In order to secure the fluid connection 2 to the top plate 7 after the cylindrical extension 6 has been inserted into the aperture 8 but prior to brazing of the heat exchanger 1, the cylindrical extension 6 is provided with several protrusions 11 that extend outwardly from the outer surface 12 of the cylindrical extension 6. In the exemplary embodiment, the fluid connection 2 is provided with three such protrusions 11, best seen in FIG. 4 and identified therein as 11a, 11b, and 11c. The protrusions 11 are formed on the surface 12 such that they are sequentially arranged along an axial direction of the cylindrical extension 6, the axial direction being defined by the axis of revolution 14. This sequentially arrangement results in the protrusions 11 being spaced apart from one another in the axial direction, so that the first protrusion 11a is arranged furthest from the shoulder 10, the third protrusion 11c is arranged nearest to the shoulder 10, and the second protrusion 11b is arranged between the protrusions 11a and 11c.

It should be understood that the number of protrusions 11 can be less than or greater than three. For example, in some embodiments of the invention it may suffice to have only two protrusions 11. In other embodiments the cylindrical extension 6 can be provided with four or more protrusions 11.

In one especially preferable embodiment, the protrusions 11 have a conical profile, as depicted in FIG. 4. In such an embodiment, the conical profile of each protrusion 11 can linearly vary from a first diameter to a second diameter, the second diameter being greater than the first diameter by a small amount. It can be especially preferable for the first diameter of each of the protrusions 11 to be equal in size to the outer diameter of the cylindrical extension 6 and to have the first diameter of each protrusion 11 arranged further from the shoulder 10 than the second diameter of the protrusion. In this manner, each protrusion 11 defines a tapered cylindrical ramp that smoothly blends into the outer surface 12 of the cylindrical extension 6. This can facilitate the alignment of the cylindrical extension 6 and the cylindrical aperture 8 during assembly of the fluid connection 2.

The second diameters the protrusions 11 can be made to vary slightly from one another, with the second diameters progressively increasing from the protrusion 11 that is furthest from the shoulder 11 to the protrusion 11 that is nearest to the shoulder 10. This results, in the exemplary embodiment, in the protrusion 11a having a second diameter D1 that is slightly larger than the diameter of the outer surface 12 of the cylindrical extension 6, the protrusion 11b having a second diameter D2 that is slightly larger than the diameter D1, and the third protrusion 11c having a second diameter D3 that is slightly larger than the diameter D2.

In order to facilitate the insertion of the cylindrical extension 6 into the cylindrical aperture 8, the cylindrical inner wall 13 of the flange 9 can be sized to have a diameter that is slightly larger than the diameter of the outer wall 12 of the cylindrical extension 6. The diameter of the cylindrical inner wall 13 can be sized to be approximately equal to the second diameter of the protrusion 11 that is nearest to the shoulder 10 (e.g. the diameter D3 of the protrusion 11c in FIG. 4). This can cause at least that one of the protrusions 11 to frictionally engage against the cylindrical inner wall 13 so that the fluid connection 2 can be securely retained prior to brazing of the heat exchanger. In order to ensure such engagement, the diameter of the cylindrical inner wall 13 can be sized to be slightly smaller than that second diameter, so that an interference fit is provided between at least that one protrusion 11 and the cylindrical inner wall 13.

During insertion of the fluid connection 2 into the top plate 7, the conical profiles of the protrusions 11 can serve to align the cylindrical extension 6 centrally within the aperture 8. This has the benefit of providing a somewhat uniform gap between the outer surface 12 of the cylindrical extension 6 and the inner wall 13 of the flange 9. During the brazing of the heat exchanger 1, this gap is filled with braze alloy 17 and a metallurgical joint is created between the extension 6 and the cylindrical inner wall 13 of the flange 9, so that the fluid connection 2 is firmly and securely joined to the heat exchanger 1.

Various alternatives to the certain features and elements of the present invention are described with reference to specific embodiments of the present invention. With the exception of features, elements, and manners of operation that are mutually exclusive of or are inconsistent with each embodiment described above, it should be noted that the alternative features, elements, and manners of operation described with reference to one particular embodiment are applicable to the other embodiments.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the scope of the invention as defined in the appended claims.

## Claims

1. A brazed fluid connection (2) for a heat exchanger (1), comprising:
a fluid flow channel (3) extending from a first end (4) of the brazed fluid connection (2) to a second end (5) of the brazed fluid connection (2);
a cylindrical extension (6) arranged at the second end (5) and received into a cylindrical aperture (8) provided in a top plate (7) of the heat exchanger (1);
a shoulder (10) adjacent to the cylindrical extension (6) disposed against a flange (9) extending along a periphery of the aperture (8), the brazed fluid connection being **characterised by**
a plurality of protrusions (11) extending from an outer surface (12) of the cylindrical extension (6), one or more of the plurality of protrusions (11, 11a, 11b, 11c) engaging against a cylindrical inner wall (13) of the flange (9); and
braze alloy (17) creating a metallurgical joint between the cylindrical extension (6) and the cylindrical inner wall (13) of the flange (9).

2. The brazed fluid connection (2) of claim 1, wherein the plurality of protrusions (11, 11a, 11b, 11c) are sequentially arranged in an axial direction of the cylindrical extension (6).

3. The brazed fluid connection (2) of claim 1, wherein each one of the plurality of protrusions (11, 11a, 11b, 11c) has a conical profile.

4. The brazed fluid connection (2) of claim 3, wherein the conical profile of each one of the plurality of protrusions (11, 11a, 11b, 11c) includes a first diameter that is equal to an outer diameter of the cylindrical extension (6), and a second diameter greater than the first diameter.

5. The brazed fluid connection (2) of claim 4, wherein the first diameter of the conical profile is further from the shoulder (10) than the second diameter of the conical profile for each one of the plurality of protrusions (11).

6. The brazed fluid connection (2) of claim 4, wherein the plurality of protrusions (11,11a,11b, 11c) includes a first protrusion (11a) and a second protrusion (11b), the first protrusion (11a) being arranged further from the shoulder (10) than the second protrusion (11b), the second diameter of the conical profile of the first protrusion (11a) being smaller than the second diameter of the conical profile of the second protrusion (11b).

7. The brazed fluid connection (2) of claim 1, wherein the first end (4) is adapted to securely receive a fluid hose.

## Patentansprüche

1. Hartlötfluidverbindung (2) für einen Wärmeaustauscher (1), die umfasst:
einen Fluidstromkanal (3), der sich von einem ersten Ende (4) der Hartlötfluidverbindung (2) zu einem zweiten Ende (5) der Hartlötfluidverbindung (2) erstreckt;
eine zylindrische Erweiterung (6), die an dem zweiten Ende (5) angeordnet ist und in einer zylindrischen Öffnung (8), die in einer oberen Platte (7) des Wärmeaustauschers (1) vorgesehen ist, aufgenommen wird;
eine Schulter (10) angrenzend an die zylindrische Erweiterung (6), die gegen einen Flansch (9) angeordnet ist, der sich entlang eines Umfangs der Öffnung (8) erstreckt, wobei die Hartlötverbindung **gekennzeichnet ist durch**:
mehrere Vorsprünge (11), die sich von einer äußeren Fläche (12) der zylindrischen Erweiterung (6) erstrecken, wobei einer oder mehrere der mehreren Vorsprünge (11, 11a, 11b, 11c) gegen eine zylindrische innere Wand (13) des Flansches (9) in Eingriff gelangen; und
Hartlötlegierung (17), die eine metallurgische Verbindung zwischen der zylindrischen Erweiterung (6) und der zylindrischen inneren Wand (13) des Flansches (9) erzeugt.

2. Hartlötverbindung (2) nach Anspruch 1, wobei die mehreren Vorsprünge (11, 11a, 11b, 11c) nacheinander in einer axialen Richtung der zylindrischen Erweiterung (6) angeordnet sind.

3. Hartlötverbindung (2) nach Anspruch 1,wobei jeder der mehreren Vorsprünge (11, 11a, 11b, 11c) ein konisches Profil besitzt.

4. Hartlötverbindung (2) nach Anspruch 3, wobei das konische Profil jedes der mehreren Vorsprünge (11, 11a, 11b, 11c) einen ersten Durchmesser, der gleich einem äußeren Durchmesser der zylindrischen Erweiterung (6) ist, und einen zweiten Durchmesser, der größer als der erste Durchmesser ist, enthält.

5. Hartlötverbindung (2) nach Anspruch 4, wobei der erste Durchmesser des konischen Profils weiter als der zweite Durchmesser des konischen Profils für jeden der mehreren Vorsprünge von der Schulter (10) entfernt ist.

6. Hartlötverbindung (2) nach Anspruch 4, wobei die mehreren Vorsprünge (11, 11a, 11b, 11c) einen ersten Vorsprung (11a) und einen zweiten Vorsprung (11b) enthalten, wobei der erste Vorsprung (11a) weiter als der zweite Vorsprung (11b) von der Schulter (10) entfernt angeordnet ist, wobei der zweite Durchmesser des konischen Profils des ersten Vorsprungs (11a) kleiner als der zweite Durchmesser des konischen Profils des zweiten Vorsprungs (11b) ist.

7. Hartlötverbindung (2) nach Anspruch 1, wobei das erste Ende (4) ausgelegt ist, einen Fluidschlauch sicher aufzunehmen.

## Revendications

1. Raccord de fluide brasé (2) pour un échangeur de chaleur (1), comportant :
un canal d'écoulement de fluide (3) s'étendant à partir d'une première extrémité (4) du raccord de fluide brasé (2) jusqu'à une seconde extrémité (5) du raccord de fluide brasé (2) ;
une extension cylindrique (6) agencée sur la seconde extrémité (5) et reçue dans une ouverture cylindrique (8) prévue dans une plaque supérieure (7) de l'échangeur de chaleur (1) ;
un épaulement (10) adjacent à l'extension cylindrique (6) disposé contre un rebord (9) s'étendant le long d'une périphérie de l'ouverture (8), le raccord de fluide brasé étant **caractérisé par**
une pluralité de saillies (11) s'étendant à partir d'une surface extérieure (12) de l'extension cylindrique (6), une ou plusieurs saillies parmi la pluralité de saillies (11, 11a, 11b, 11c) s'engageant contre une paroi intérieure cylindrique (13) du rebord (9) ; et
un alliage à braser (17) créant un joint métallurgique entre l'extension cylindrique (6) et la paroi intérieure cylindrique (13) du rebord (9).

2. Raccord de fluide brasé (2) selon la revendication 1, dans lequel les saillies de la pluralité de saillies (11, 11a, 11b, 11c) sont agencées séquentiellement dans une direction axiale de l'extension cylindrique (6).

3. Raccord de fluide brasé (2) selon la revendication 1, dans lequel chaque saillie de la pluralité de saillies (11, 11a, 11b, 11c) a un profil conique.

4. Raccord de fluide brasé (2) selon la revendication 3, dans lequel le profil conique de chaque saillie de la pluralité de saillies (11, 11a, 11b, 11c) inclut un premier diamètre qui est égal à un diamètre extérieur de l'extension cylindrique (6), et un second diamètre supérieur au premier diamètre.

5. Raccord de fluide brasé (2) selon la revendication 4, dans lequel le premier diamètre du profil conique est plus éloigné de l'épaulement (10) que le second diamètre du profil conique pour chaque saillie de la pluralité de saillies (11).

6. Raccord de fluide brasé (2) selon la revendication 4, dans lequel la pluralité de saillies (11, 11a, 11b, 11c) inclut une première saillie (11a) et une seconde saillie (11b), la première saillie (11a) étant agencée plus loin de l'épaulement (10) que la seconde saillie (11b), le second diamètre du profil conique de la première saillie (11a) étant inférieur au second diamètre du profil conique de la seconde saillie (11b).

7. Raccord de fluide brasé (2) selon la revendication 1, dans lequel la première extrémité (4) est adaptée pour recevoir un tuyau de fluide de manière fixée.
